(19) Europäisches Patentamt
European Patent Office
Office européen des brevets

(11) **EP 3 412 698 A1**

(12) **EUROPEAN PATENT APPLICATION**

(43) Date of publication:
**12.12.2018 Bulletin 2018/50**

(21) Application number: **17175211.6**

(22) Date of filing: **09.06.2017**

(51) Int Cl.:
***C08G 63/08*** *(2006.01)* ***C08G 63/80*** *(2006.01)*
***C08G 63/82*** *(2006.01)* ***C08G 63/87*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fraunhofer-Gesellschaft zur Förderung der angewandten Forschung e.V.
80686 München (DE)**

(72) Inventors:
- **Pfaendner, Dr. Rudolf
64668 Rimbach (DE)**
- **Papaspyrides, Prof. Dr. Constantine
80686 Munich (DE)**
- **Diamanti, Dr. Panagiota Christina
80686 Munich (DE)**
- **Vougiouka, Dr. Stamatina
80686 Munich (DE)**

(74) Representative: **Pfenning, Meinig & Partner mbB
Patent- und Rechtsanwälte
Theresienhöhe 11a
80339 München (DE)**

(54) **METHOD FOR MANUFACTURING ALIPHATIC POLYESTERS, ALIPHATIC POLYES-TER AND USE OF PHOSPHOROUS-CONTAINING ORGANIC ADDITIVES**

(57) The present invention is related to a method for manufacturing aliphatic polyesters and to an aliphatic polyester. Furthermore, the invention is related to the use of phosphorous-containing organic additives as an agent for increasing the degree of crystallization, the molecular weight and the branching density of a polyester prepolymer.

EP 3 412 698 A1

## Description

The present invention is related to a method for manufacturing aliphatic polyesters and to an aliphatic polyester. Furthermore, the invention is related to the use of phosphorous-containing organic additives as an agent for increasing the degree of crystallization, the molecular weight and the branching density of a polyester prepolymer.

It is well known that the properties of polymers are significantly influenced by the degree of crystallinity, the average molecular weight (high or low), the molecular weight distribution (narrow or broad, monomodal or multimodal) and the polymer architecture (linear, branched, star-like). The coupling between the molecular weight distribution, the crystallinity and the properties can also be observed for polyesters. In order to produce tailor-made polyesters for different applications it is thus extremely desirable to map out methods for influencing the molecular weight, the molecular weight distribution and the polymer architecture.

Polylactic acid (PLA) is one of the most famous thermoplastic aliphatic polyesters. It is made from natural resources and may substitute traditional oil based polymers such as PET or PS in packaging applications or ABS in industrial parts. Since PLA is a partially crystalline, aliphatic and thermoplastic polymer it can be processed by various techniques such as extrusion, injection molding, film blowing and fiber spinning.

In a first step, PLA is either produced by a direct polycondensation reaction or by ring opening polymerization. The polycondensation of lactic acid monomers results in polyester oligomers with a mass averaged molecular weight between 1,000 and 5,000 $g \cdot mol^{-1}$. The ring opening polymerization of lactide, in contrast to that, generates polyester oligomers with a mass averaged molecular weight between 2,000 and 10,000 $g \cdot mol^{-1}$.

For most applications, the degree of crystallinity and the average molecular weight of these polyester oligomers are too low. Hence the polyester oligomers have to be processed in at least one further step.

Different possibilities for increasing the average molecular weight of polyester oligomers or their degree of crystallinity are known from prior art. However, they all suffer from various disadvantages and cannot easily be combined.

One of the conventional further processing steps in the production of PLA is the addition of so-called nucleating agents. A nucleating agent may, for instance be talc, or a salt of an organic acid such as sodium benzoate. An overview about nucleation of polymers can be found in Mercier, J. P., Polymer Engineering and Science (1990), 30(5), 270-8. Many of the nucleating agents that are mentioned in this article can be used in combination with PLA. An overview about nucleating agents for PLA and about the importance of tailored crystallization is described in G. Liu et al. Adv. Mater. 2014, 26, 6905-6911. Nucleating agents are, however, insoluble in the polymer and provoke inhomogeneity.

W.D. Habicher et al, Macromol. Symp. 2005, 225, 147-164 disclosed that phosphites and phosphinates can be added to polymers in order to act as process stabilizers and avoid a degradation. They react with hydroperoxides and are, in this way, consumed and oxidized to the corresponding phosphate or phosphonate.

Furthermore, it is known from prior art that solid state polycondensation (SSP) can smoothly increase the molecular weight of polyesters. The SSP process is e.g. described in Vouyiouka, S. N., Papaspyrides, C. D. in Encyclopedia of Polymer Science and Technology (4th Edition) (2014), 12, 700-732 (edited by Mark, Herman F). An overview about the SSP condition for PLA can be found in S. Vouyiouka et al. Pol. Degr. Stab. 2013, 98, 2473-2481. However, the SSP only leads to a slight increase in molecular weight and does not improve the degree of crystallinity of the polyester. This is insufficient for certain applications since also a high crystallinity is required besides a high average molecular weight.

From EP 0770104 A1 a process is known which is appropriate for increasing the molecular weight of crystalline polycondensates without crosslinking. It involves heating the respective polycondensate or a copolymer or blend of it to a temperature above the melting point of the polycondensate and adding at least one diphosphonite. This process is, however, not ecological and sustainable since heating the mixture to a temperature above the melting point consumes a great amount of energy. Furthermore, the process can only be applied to recyclates of the polycondensates or to blends of a recyclate with a virgin material. In the case of a pure virgin material the addition of further compounds selected from the class of the diepoxides, bismaleimides, tetracarboxylic dianhydrides, bisoxazolines, bisoxazines, bisacyl lactams and diisocyanates is required. This complicates the process and increases the costs.

EP 0785967 A1 describes a method for increasing the molecular weight of polycondensates, which comprises heating a polycondensate in the temperature range below the melting point and above the glass transition temperature in the solid phase of the polymer with addition of at least one sterically hindered hydroxyphenylalkylphosphonic ester or monoester. Besides increasing the molecular weight the method also causes undesirable side reactions, namely crosslinking. As a result, highly crosslinked polycondensates are produced with this method which can only be used in very specific applications such as foaming. Moreover, the method starts from a recyclate material with an already high average molecular weight and the method is not universally applicable since it is appropriate for polycondensates comprising aromatic monomers such as polyethylene terephthalate (PET) and polybutylene terephthalate (PBT).

Also JP 2010-209313 discloses a process for producing an aliphatic polyester resin having a high molecular weight. The process comprises a melt polymerization step followed by a SSP step in the presence of an oxyacid of sulfur, preferably sulfuric acid. In the melt polymerization step an aqueous solution of the monomer is provided. Sulfuric

acid is added as a catalyst. Additionally, a phosphorus compound can be added to the aqueous solution. Furthermore, to increase the thermal stability a stabilizer may be added after to the melt polymerization or after the SSP process. As stabilizers hindered phenol compounds, thioether compounds, vitamin compounds, triazole-based compounds and hydrazine derivative compounds are mentioned, phosphorus-based compounds may be used in combination thereof.

The object of the current invention therefore was to create a method for producing an aliphatic polyester with a favorable combination of properties, namely a high average molecular weight, a high crystallinity and a high branching density. Another object of the current invention was to use easily available phosphorous-containing organic additives in this method and to reduce the amount of energy required for the process. Last but not least, the object of the current invention has been to provide such an aliphatic polyester.

With respect to the method the object is solved with the features of claim 1. With respect to the use of the phosphorous-containing organic additive this is realized with the features of claim 14 and with respect to the melt-stable PLA the object is solved with the features of claim 10.

The method for manufacturing aliphatic polyesters according to the invention comprises the following steps:

a) mixing a polyester prepolymer with at least one phosphorous-containing organic additive and
b) subjecting the resulting mixture to a temperature above the glass transition temperature and below the melting point of the polyester prepolymer at least for several minutes,

wherein step a) and b) are carried out simultaneously at least in parts or step b) directly follows step a).

According to IUPAC a prepolymer is a polymer or oligomer the molecules of which are capable of entering, through reactive groups, into further polymerization and thereby contributing more than one structural unit to at least one type of chain of the final polymer. The polyester prepolymer is thus a still reactive polyester which has a lower molecular weight than the final aliphatic polyester.

Surprisingly, this method allows producing an aliphatic polyester with minimal effort and a minimum amount of energy. If the phosphorous-containing organic additive is added to an already produced polyester prepolymer instead of a mixture of monomers or a mixture of low molecular ester-oligomers, excessive cross-linking and a decrease of crystallinity during polymerization can be avoided. The phosphorous-containing organic additives are not accumulated in some spots but serve to link the polyester prepolymer chains, provide controlled branching and are thus spaced and arranged in larger intervals. Thus the incorporated additive moieties do not disturb the structural order of the aliphatic polyester and the degree of crystallinity can be increased. The detrimental effects of phosphorous additives which are added in a different process step can be avoided.

The excellent properties of the produced melt-stable polyester manifest in the rheological behaviour and the processability as well as in the mechanical parameters of the already processed material. Additionally, a high resistance against discoloration of the material can be noticed. Besides a low yellowness index the polyester obtained by this method also shows a high stability against oxidation processes.

Preferably the polyester prepolymer is aliphatic, in particular obtainable through a ring-opening polymerization of lactides or lactones or through a polycondensation of at least one kind of monomer selected from the group consisting of aliphatic hydroxycarboxylic acids, aliphatic dibasic acids, aliphatic dibasic acid derivatives, aliphatic diols and mixtures thereof. It is even more preferred if the polyester prepolymer is selected from the group consisting of polylactic acid, polyglycolic acid, poly-ε-caprolactone, polypropiolactone, polybutyrolactone, polypivalolactone, polyvalerolactone, poly-3-hydroxybutyrate, poly(4-hydroxybutyrate) poly(4-hydroxy-valerate), polyalkylene succinate, such as polyethylenesuccinate, polybutylenesuccinate, polyhexamethylenesuccinate, polyethyleneadipate, polybutyleneadipate, polyhexamethyleneadipate, polyethyleneoxalate, polybutyleneoxalate, polyhexamethyleneoxalate, polyethylenesebacate, polybutylenesebacate and mixtures thereof and if it additionally has a viscosity averaged molecular weight $M_v$ from 5,000 to 50,000 $g \cdot mol^{-1}$, particularly from 10,000 to 30,000 $g \cdot mol^{-1}$. In one specifically preferred embodiment the polyester prepolymer is a polylactic acid, particularly with a viscosity averaged molecular weight $M_v$ of 15.000 to 25,000 $g \cdot mol^{-1}$.

It is also advantageous when the phosphorous-containing organic additive comprises at least one phosphorous atom which is substituted by at least two groups selected from substituted alkoxy-, unsubstituted alkoxy-, substituted phenoxy-, unsubstituted phenoxy- and mixtures thereof. It is particularly preferred when the phosphorous-containing organic additive comprises from two to six groups selected from substituted alkoxy-, unsubstituted alkoxy-, substituted phenoxy-, unsubstituted phenoxy- and mixtures thereof.

Phosphorous-containing organic additives with only two such groups mainly show a linear molecular weight build-up. A higher substitution results in an increase of the branching density of the obtained polymer.

Preferably the phosphorous-containing organic additive is selected from the group consisting of phosphonites, phosphites, phosphonates, phosphates and mixtures thereof. Representatives of these classes are commercially available and do not have to be synthesized in laborious experiments first.

Compounds with a formula selected from the group of $(O)_yP(OR)_3$, $X\text{-}P(OR)_2$, $X[\text{-}OP(OR)_2]_z$, $X[\text{-}P(OR)_2(O)_y]_z$ and mixtures or salts thereof, wherein

y is 0 or 1,
z is 1, 2 or 3,
R is the same or different at each occurrence and being selected from the group consisting of linear or branched alkyl residues, unsubstituted or substituted aromatic residues, metals and mixtures thereof, wherein two residues (OR) which are bound to the same phosphorus atom can be covalently linked to each other, X is a residue with a valence corresponding to z, the residue being selected form the group consisting of linear or branched alkyl or heteroalkyl residues, unsubstituted or substituted aromatic residues and halogen are especially suited as phosphorous-containing organic additive.

In particular the phosphorous-containing organic additive can be a compound selected from the group consisting of

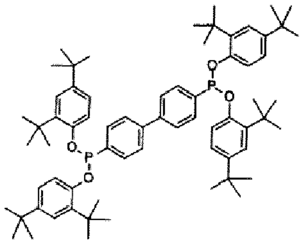 , 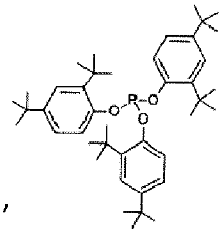 , 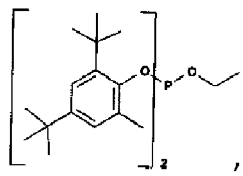 ,

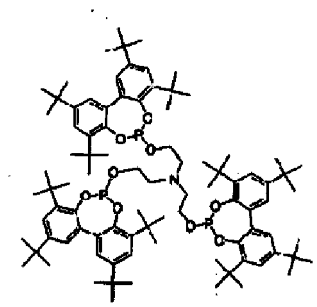 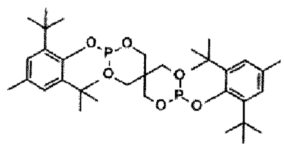

trisphenylphosphite, tris(nonylphenyl)phosphite, trislaurylphosphite, tris(octadecyl)phosphite, tristearylsorbitoltriphosphite, tris(octadecyl)phosphate, trislaurylphosphate,

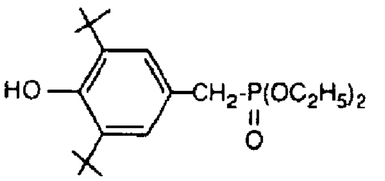 , 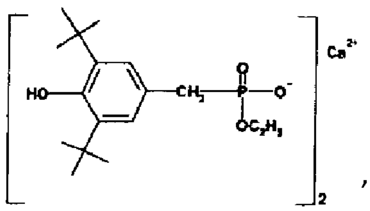 ,

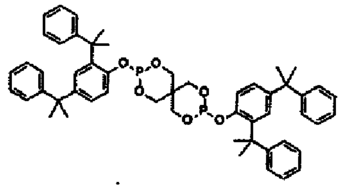 , 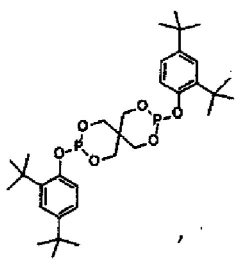 , 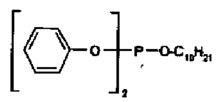 ,

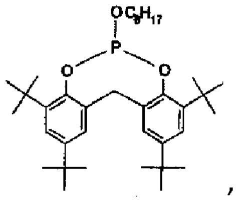 , 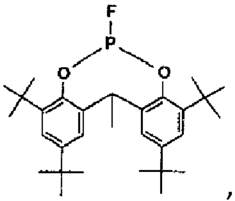 , 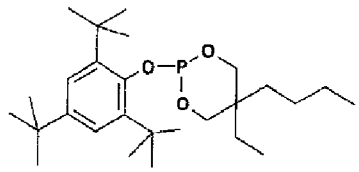 ,

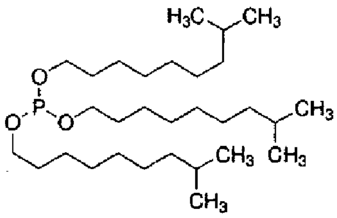

and mixtures of thereof.

The mixture of the polyester prepolymer and the phosphorous-containing organic additive can furthermore comprise at least one transesterification catalyst, preferably containing tin, antimony or titanium, in particular tin-(II)-octoate, and/or at least one additive, in particular selected from the group consisting of UV-absorbers, light stabilizers, stabilizers (antioxidants), hydroxylamines, benzofuranones, metal deactivators, filler deactivators, flame retardants, impact modifiers, plasticizers, lubricants, rheology modifiers, processing aids, pigments, dyes, filler, reinforcement agents, fluorescent agents, antimicrobials, antistatic agents, slip agents, antiblocking agents, nucleating agents, coupling agents, dispersants, compatibilizers, chain extenders, oxygen scavengers, acid scavengers, markers, antifogging agents or combinations of those.

The mass ratio of phosphorous-containing organic additive : polyester prepolymer can be from 0.01 : 99.99 to 5 : 95, preferably from 0.1 : 99.9 to 3 : 97.

In order to promote the conversion the mixture can either be purged with an inert gas, preferably selected from the group consisting of nitrogen, argon and mixtures thereof, or subjected to a vacuum, preferably a vacuum with a residual pressure below 10 mbar, more preferably with a pressure below 1 mbar. The inert gas or the vacuum can be applied for a period of time from 10 min to 30 hrs, preferably from 1 h to 25 hrs, more preferably from 3 to 20 hrs.

In a preferred embodiment the mixture is subjected to a temperature in the range of 50 to 150°C, preferably 70 to 140°C, even more preferably 100 to 140°C, particularly preferred 120 to 140°C, in step b).

Preferably a transesterification reaction takes place during step b) and the phosphorous-containing organic additive can thereby be converted to a degree of at least 80 %, preferably at least 95%.

The aliphatic polyester according to the invention contains polymer chains with non-terminal phosphorus functionalities that are covalently bound within the chain.

It is preferred, if the aliphatic polyester is obtainable from a polyester prepolymer, in particular by a process as described in the beginning. The aforementioned aliphatic polyester is preferably also obtained by the process as described in the beginning.

Moreover the aliphatic polyester preferably has a viscosity averaged molecular weight $M_v$ which is increased by at least 15 %, more preferably 25 %, most preferably 30%, with respect to the viscosity averaged molecular weight $M_v$ of the polyester prepolymer. The viscosity averaged molecular weight $M_v$ is determined as described below.

According to the invention a phosphorous-containing organic additive is used under atypical conditions and for an unusual purpose, namely for increasing the degree of crystallization, the viscosity averaged molecular weight and the branching density of a polyester prepolymer in a solid phase postcondensation process.

The present invention will be described in more detail with reference to the following examples and experiments without restricting the invention to those specific embodiments.

1. Drying

Before a SSP is carried out, every sample was dried under vacuum at 50 °C for 4 hours.

2. Measurement of intrinsic viscosity

The intrinsic viscosity ([η] in $dL \cdot g^{-1}$) was measured in chloroform at a concentration of 0.2 $g \cdot dL^{-1}$ in an Ubbelohde capillary viscometer at 30 °C. The [η] values were obtained at a single solution concentration using the following equation:

$$[\eta] = 1/C\,[2\,(\eta_{sp} - \ln\ \eta_{red})]^{1/2}$$

where C is the solution concentration (in g·dL$^{-1}$), $\eta_{sp}$ the specific viscosity of the solution and $\eta_{red}$ the reduced viscosity of the solution. The Mark-Houwink-Sakurada parameters K and a were assumed to be 1.31x10$^{-4}$ and 0. 777 respectively in order to calculate the viscosity averaged molecular weight ($M_v$).

3. Measurement of thermal properties

Differential scanning calorimetry (DSC) measurements were performed in a Mettler DSC 1 STARe with a heating rate of 10°C ·min$^{-1}$ under nitrogen flow (10 ml·min$^{-1}$) from 0 to 180 °C. Glass transition (Tg), melting point ($T_m$) and mass fraction crystallinity ($x_c$ in %) were determined ($\Delta H_0$=93.1 J·g$^{-1}$).

4. Preparation of the polyester prepolymer

PLA grade of $M_v$ = 24,700 g·mol$^{-1}$ was prepared through hydrolysis of commercial PLA pellets for 5 days at 60 °C and pH=3. For the inventive samples IE1 - IE3 a commercially available phosphonate or phosphite was added to the PLA at a concentration of 0.5 % (5000 ppm) via dissolution of the PLA and the necessary amount of additive in chloroform, and solvent evaporation in a Rotary Evaporator (Buchi R-210 rotavapor). Pure PLA (without any additive) was prepared as comparative sample CE1. The obtained polyesters were obtained as flakes. The composition of the samples is shown in the following table.

Table 1: Composition of inventive samples IE1, IE2, IE3 and comparative sample CE1.

| | Component 1 | Component 2 |
|---|---|---|
| **CE1** | PLA | None |
| **IE1** | PLA | 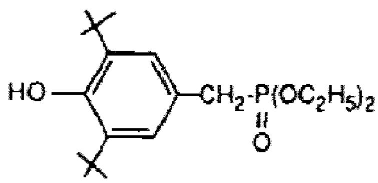 |
| **IE2** | PLA | 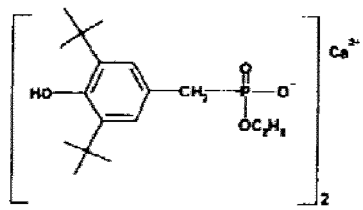 |
| **IE3** | PLA | 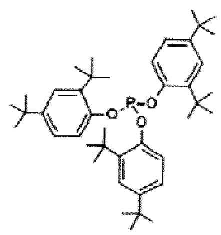 |

5. Solid state polymerization runs

The inventive samples IE1-IE3 have been subjected to a SSP for 24 hours at 130 °C under flowing nitrogen. For the sake of comparison, also the pure PLA is subjected to such an SSP (comparative sample CE1). The results are shown in the tables below. The results in table 2 provide evidence that the method according to the invention performs better in increasing the average molecular weight than a usual SSP with the pure PLA prepolymer. Additionally table 2 shows for sample IE3 that also the degree of crystallinity could be considerably increased according to the method of the invention whereas the SSP with the comparative sample only led to a slight increase in crystallinity.

Table 2: Comparison of the viscosity and viscosity averaged molecular weight for all samples before ([$\eta_0$], $M_{v,o}$) and after ([$\eta_f$], $M_{v,f}$) the SPP.

| | $t_{@SSP}$ in h | [$\eta_0$] in $dL\cdot g^{-1}$ | [$\eta_f$] in $dL\cdot g^{-1}$ | $M_{v,o}$ in $g\cdot mol^{-1}$ | $M_{v,f}$ in $g\cdot mol^{-1}$ | $M_{v,f}$/ $M_{v,o}$ in% |
|---|---|---|---|---|---|---|
| **CE1** | 24 | 0.339 | 0.362 | 24,700 | 26,900 | 9 |
| **IE1** | 24 | 0.339 | 0.387 | 24,700 | 29,300 | 19 |
| **IE2** | 24 | 0.339 | 0.390 | 24,700 | 29,600 | 20 |
| **IE3** | 24 | 0.339 | 0.413 | 24,700 | 31,800 | 29 |

Table 3: Comparison of the glass transition temperature, the melt temperature and the degree of crystallinity for comparative sample CE1 and inventive sample IE3 before ($T_{g,0}$, $T_{m,0}$, $x_{c,0}$) and after ($T_{g,f}$, $T_{m,f}$, $x_{c,f}$) the SSP.

| | $t_{@SSP}$ in h | $T_{g,0}$ in °C | $T_{g,f}$ in °C | $T_{m,0}$ in °C | $T_{m,f}$ in °C | $X_{c,0}$ in% | $X_{c,f}$ in% |
|---|---|---|---|---|---|---|---|
| **CE1** | 24 | 47.3 | 51.5 | 142.9 | 146.2 | 37.4 | 43.5 |
| **IE3** | 24 | 47.3 | 53.2 | 142.9 | 147.1 | 37.4 | 45.1 |

## Claims

**1.** Method for manufacturing aliphatic polyesters, the method comprising the following steps:

a) mixing a polyester prepolymer with at least one phosphorous-containing organic additive and
b) subjecting the resulting mixture to a temperature above the glass transition temperature and below the melting point of the polyester prepolymer at least for several minutes,

wherein
step a) and b) are carried out simultaneously at least in parts or
step b) is directly following step a).

**2.** Method according to claim 1, wherein the polyester prepolymer is aliphatic,
preferably obtainable through a ring-opening polymerization of lactides or lactones or through a polycondensation of at least one kind of monomer selected from the group consisting of aliphatic hydroxycarboxylic acids, aliphatic dibasic acids, aliphatic dibasic acid derivatives, aliphatic diols and mixtures thereof,
more preferably selected from the group consisting of polylactic acid, polyglycolic acid, poly-ε-caprolactone, polypropiolactone, polybutyrolactone, polypivalolactone, polyvalerolactone, poly-3-hydroxy-butyrate, poly(4-hydroxybutyrate) poly(4-hydroxy-valerate), polyalkylene succinate, such as polyethylenesuccinate, polybutylenesuccinate, polyhexamethylenesuccinate, polyethyleneadipate, polybutyleneadipate, polyhexamethyleneadipate, polyethyleneoxalate, polybutyleneoxalate, polyhexamethyleneoxalate, polyethylenesebacate, polybutylenesebacate and mixtures thereof,
even more preferably with a viscosity averaged molecular weight from 5,000 to 50,000 $g\cdot mol^{-1}$, particularly from 10,000 to 30,000 $g\cdot mol^{-1}$.

**3.** Method according to one of the preceding claims, wherein the phosphorous-containing organic additive
comprises at least one phosphorous atom which is substituted by at least two groups selected from alkoxy-, phenoxy- and mixtures thereof, and
is preferably selected from the group consisting of phosphonites, phosphites, phosphonates, phosphates and mixtures thereof.

**4.** Method according to one of the preceding claims, wherein the phosphorous-containing organic additive is a compound with a formula selected from the group of

$$(O)_yP(OR)_3,$$

$X-P(OR)_2$,

$X[-OP(OR)_2]_z$,

$X[-P(OR)_2(O)_y]_z$,

and mixtures or salts thereof, wherein

y is 0 or 1,
z is 1, 2 or 3,
R is the same or different at each occurrence and being selected from the group consisting of linear or branched alkyl residues, unsubstituted or substituted aromatic residues, metals and mixtures thereof, wherein two residues (OR) which are bound to the same phosphorus atom can be covalently linked to each other,
X is a residue with a valence corresponding to z, the residue being selected form the group consisting of linear or branched alkyl or heteroalkyl residues, unsubstituted or substituted aromatic residues and halogen;

preferably a compound selected from the group consisting of

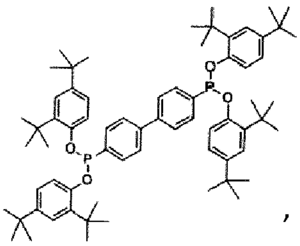
,
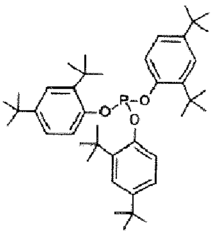
,
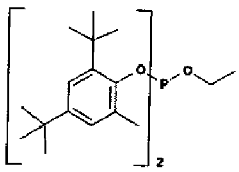
,

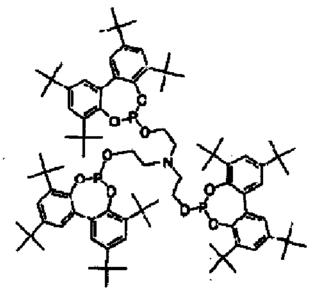
,
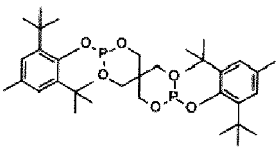
,

trisphenylphosphite, tris(nonylphenyl)phosphite, trislaurylphosphite, tris(octadecyl)phosphite, tristearylsorbitoltriphosphite, tris(octadecyl)phosphate, trislaurylphosphate,

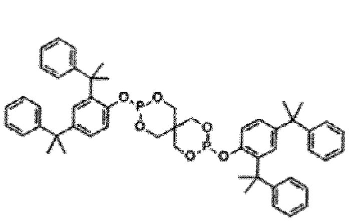
,
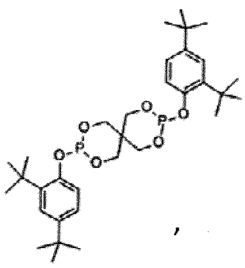
,
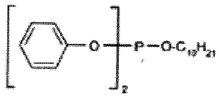
,

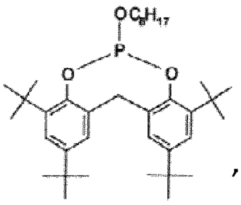, 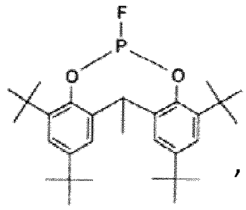, 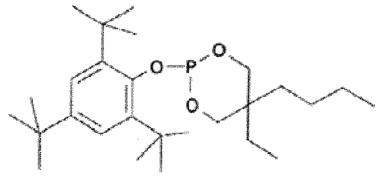,

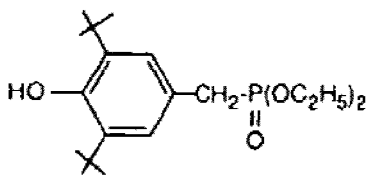, 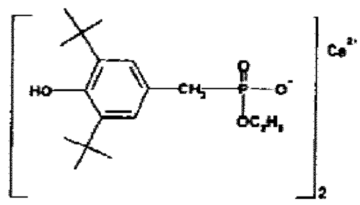,

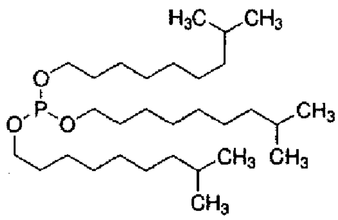

and mixtures of thereof.

5. Method according to one of the preceding claims, wherein the polyester prepolymer furthermore comprises
at least one transesterification catalyst, preferably containing tin, antimony or titanium, in particular tin-(II)-octoate, and/or
at least one additive, in particular selected from the group consisting of UV-absorbers, light stabilizers, stabilizers, hydroxylamines, benzofuranones, metal deactivators, filler deactivators, flame retardants, impact modifiers, plasticizers, lubricants, rheology modifiers, processing aids, pigments, dyes, filler, reinforcement agents, fluorescent agents, antimicrobials, antistatic agents, slip agents, antiblocking agents, nucleating agents, coupling agents, dispersants, compatibilizers, chain extenders, oxygen scavengers, acid scavengers, markers, antifogging agents or combinations of those.

6. Method according to one of the preceding claims, wherein the mass ratio of the phosphorous-containing organic additive to the polyester prepolymer is from 0.01 : 99.99 to 5 : 95, preferably from 0.1 : 99.9 to 3 : 97.

7. Method according to one of the preceding claims, wherein the mixture is
either purged with an inert gas, in particular selected from the group consisting of nitrogen, argon and mixtures thereof or subjected to a vacuum, in particular below 10 mbar,
preferably for a period of time of 10 min to 30 hrs, more preferably from 1 h to 25 hrs, most preferably from 3 to 20 hrs.

8. Method according to one of the preceding claims, wherein the mixture is subjected to a temperature in the range of 50 to 150°C, preferably 70 to 140°C, even more preferably 100 to 140°C, particularly preferred 120 to 140°C, in step b).

9. Method according to one of the preceding claims, wherein a transesterification reaction takes place during step b) and the phosphorous-containing organic additive is converted to a degree of at least 80 %, preferably at least 95%.

10. Aliphatic polyester containing polymer chains with non-terminal phosphorous functionalities that are covalently bound within the chain.

11. Aliphatic polyester according to claim 10 obtainable from a polyester prepolymer, preferably by a method according to one of the claims 1-9.

12. Aliphatic polyester according to one of the claims 10 or 11 obtained by a method according to one of the claims 1-9.

**13.** Aliphatic polyester according to one of the claims 10 to 12, the viscosity averaged molecular weight $M_v$ of the aliphatic polyester being increased by at least 15 %, preferably 25 %, more preferably 30%, with respect to the viscosity averaged molecular weight $M_v$ of the polyester prepolymer.

**14.** Use of a phosphorous-containing organic additive for increasing the degree of crystallization, the viscosity averaged molecular weight and the branching density of a polyester prepolymer in a solid phase postcondensation.

Europäisches Patentamt
European Patent Office
Office européen des brevets

# EUROPEAN SEARCH REPORT

Application Number
EP 17 17 5211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 623 539 A1 (TORAY INDUSTRIES [JP])<br>7 August 2013 (2013-08-07)<br>* example 1 *<br>* paragraph [0089] *<br>----- | 1-9,<br>12-14<br>10,11 | INV.<br>C08G63/08<br>C08G63/80<br>C08G63/82<br>C08G63/87 |
| X,D<br>Y | JP 2010 209313 A (TORAY INDUSTRIES)<br>24 September 2010 (2010-09-24)<br>* examples 7, 9-16 *<br>----- | 10-14<br>1-9 | |
| Y | EP 2 280 036 A1 (TORAY INDUSTRIES [JP])<br>2 February 2011 (2011-02-02)<br>* paragraph [0075] *<br>----- | 1-9 | |

TECHNICAL FIELDS SEARCHED (IPC)

C08G

The present search report has been drawn up for all claims

1

| Place of search | Date of completion of the search | Examiner |
|---|---|---|
| The Hague | 15 November 2017 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 17 5211

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2017

| Patent document cited in search report | Publication date | Patent family member(s) | Publication date |
|---|---|---|---|
| EP 2623539 A1 | 07-08-2013 | CN 103124760 A | 29-05-2013 |
| | | EP 2623539 A1 | 07-08-2013 |
| | | JP 5737182 B2 | 17-06-2015 |
| | | JP 5949881 B2 | 13-07-2016 |
| | | JP 2015034304 A | 19-02-2015 |
| | | JP WO2012042993 A1 | 06-02-2014 |
| | | KR 20140009138 A | 22-01-2014 |
| | | MY 162777 A | 14-07-2017 |
| | | TW 201213388 A | 01-04-2012 |
| | | US 2013197186 A1 | 01-08-2013 |
| | | WO 2012042993 A1 | 05-04-2012 |
| JP 2010209313 A | 24-09-2010 | NONE | |
| EP 2280036 A1 | 02-02-2011 | EP 2280036 A1 | 02-02-2011 |
| | | JP 4678066 B2 | 27-04-2011 |
| | | JP 5482634 B2 | 07-05-2014 |
| | | JP 2011068902 A | 07-04-2011 |
| | | JP WO2009142196 A1 | 29-09-2011 |
| | | KR 20110021738 A | 04-03-2011 |
| | | MY 154053 A | 30-04-2015 |
| | | US 2011065871 A1 | 17-03-2011 |
| | | WO 2009142196 A1 | 26-11-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0770104 A1
- EP 0785967 A1
- JP 2010209313 A

### Non-patent literature cited in the description

- **MERCIER, J. P.** *Polymer Engineering and Science,* 1990, vol. 30 (5), 270-8
- **G. LIU et al.** *Adv. Mater.,* 2014, vol. 26, 6905-6911
- **W.D. HABICHER et al.** *Macromol. Symp.,* 2005, vol. 225, 147-164
- **VOUYIOUKA, S. N. ; PAPASPYRIDES, C. D.** Encyclopedia of Polymer Science and Technology. 2014, vol. 12, 700-732
- **S. VOUYIOUKA et al.** *Pol. Degr. Stab.,* 2013, vol. 98, 2473-2481